# EUROPEAN PATENT SPECIFICATION

(11) **EP 4 296 050 B1**
(45) Date of publication and mention of the grant of the patent: **20.08.2025**
(21) Application number: 22756018.2
(22) Date of filing: 08.02.2022
(51) Int. Cl.: B32B 15/082, H05B 3/20, H05B 3/86, B32B 15/20, B32B 27/30, H05B 3/12, H05B 3/84

(54) **METHODS FOR MANUFACTURING LAMINATED PLATE AND HEAT GENERATOR, AND DEFROSTER**
VERFAHREN ZUR HERSTELLUNG EINER LAMINIERTEN PLATTE UND EINES WÄRMEGENERATORS UND EINER ENTFROSTUNG
PROCÉDÉ DE FABRICATION DE PLAQUE STRATIFIÉE AINSI QUE D'ÉLÉMENT CHAUFFANT, ET DÉGIVREUR

(30) Priority: 19.02.2021 JP 2021025642
(43) Date of publication of application: 27.12.2023
(73) Proprietor: Mitsui Mining & Smelting Co., Ltd., Shinagawa-ku Tokyo 141-8584 (JP)
(72) Inventor: IIDA, Hiroto, Ageo-shi, Saitama 362-0017 (JP); HOSOKAWA, Makoto, Ageo-shi, Saitama 362-0017 (JP); MIZOGUCHI, Misato, Ageo-shi, Saitama 362-0017 (JP); HIRAOKA, Shinya, Ageo-shi, Saitama 362-0017 (JP); SHIMIZU, Toshiyuki, Ageo-shi, Saitama 362-0021 (JP)
(74) Representative: Potter Clarkson
(86) International application number: PCT/JP2022/004841
(87) International publication number: WO 2022/176697

(56) References cited:
- EP-A1- 3 604 254
- JP-A- 2019 065 110
- JP-A- H07 216 313
- JP-B2- 4 354 271

## Description

### TECHNICAL FIELD

The present invention relates to methods for manufacturing a laminate and a heating element, and a defroster.

### BACKGROUND ART

As apparatuses for preventing or removing the frosting, icing, clouding, and the like of window glass in vehicles such as automobiles, defrosters are widely used. With a defroster, for example, warm air comprising no steam is intensively blown into a place where dehumidification is desired, to remove clouding to ensure visibility.

In recent years, for the purpose of the improvement of heating efficiency, power saving in electric vehicles, and the like, a defroster using a heating wire (electrically heated wire) has been required. With a defroster in this form, clouding can be removed, for example, by warming glass by a heating wire interposed between glass plates.

It is known that when a heating wire is interposed between glass plates in such a defroster, a polyvinyl acetal resin (for example, a polyvinyl butyral resin) having high light transmission properties is used as a glass intermediate film. For example, Patent Literature 1 (JP2018-35036A) discloses that regarding a glass apparatus for a vehicle comprising a pair of glass substrates, and a transparent resin intermediate film and a heating electrode sheet interposed between the glass substrates, a polyvinyl butyral resin is used as the transparent resin intermediate film.

As a heating wire for a defroster, a tungsten wire is generally used. However, a tungsten wire is thick having a wire diameter of about 30 µm and also difficult to thin and therefore provides poor visibility.

In order to address such a problem, it is proposed that instead of a tungsten wire, a copper pattern that can be formed into a thin wire be used as a heating wire. For example, Patent Literature 2 (JP2018-161889A) discloses that regarding a polyvinyl acetal resin film having a polyvinyl acetal resin layer, and an electrically conductive structure based on a metal foil, disposed on the surface or inside of the polyvinyl acetal resin layer, the electrically conductive structure is composed of copper or the like. In addition, Patent Literature 3 (JP2019-142763A, from which EP 3 604 254 A1 is a family member) discloses that a laminate in which a polyvinyl acetal resin film and a copper foil are superposed is thermocompression-bonded to obtain the polyvinyl acetal resin film to which the copper foil is attached, and then the copper foil attached to the resin film is processed to form an electrically conductive layer. Further, Patent Literature 4 (WO2017/090386) discloses that in a laminate having a resin layer comprising a polyvinyl acetal resin and a copper layer, the copper layer is processed by a method such as a subtractive process, a semi-additive process, and a modified semi-additive process to form a wiring pattern.

### CITATION LIST

### PATENT LITERATURE

Patent Literature 1: JP2018-35036A
Patent Literature 2: JP2018-161889A
Patent Literature 3: JP2019-142763A
Patent Literature 4: WO2017/090386
Patent Literature 5: JP4354271B

### SUMMARY OF INVENTION

However, a polyvinyl acetal resin is a thermoplastic resin, and the lamination of a copper foil and a resin film needs to be performed under the conditions of low temperature and low pressure (for example, 180°C or less and 0.6 MPa or less) for a short time (for example, several tens of seconds or less). Therefore, a polyvinyl acetal resin results in low reactivity with a copper foil, and it is difficult to ensure adhesion between the copper foil and the resin film.

The present inventors have now found that by attaching or forming a polyvinyl acetal resin film on a copper foil having a treated surface on which the developed interfacial area ratio Sdr and the root mean square height Sq defined in ISO 25178 are controlled in predetermined ranges respectively, it is possible to manufacture a laminate excellent in adhesion between the copper foil and the resin film.

Therefore, it is an object of the present invention to manufacture a laminate that is excellent in adhesion between a copper foil and a resin film while using a polyvinyl acetal resin having low reactivity with the copper foil.

According to an aspect of the present invention, there is provided a method for manufacturing a laminate, comprising the steps of:
providing a copper foil having a treated surface having a developed interfacial area ratio Sdr of 0.50% or more and 9.00% or less and a root mean square height Sq of 0.010 µm or more and 0.200 µm or less on at least one side, and
attaching or forming a polyvinyl acetal resin film on the treated surface of the copper foil to form a laminate,
wherein the Sdr and Sq are values measured in accordance with ISO 25178 under conditions in which a cutoff wavelength of an S-filter is 0.55 µm, and a cutoff wavelength of an L-filter is 10 µm.

According to another aspect of the present invention, there is provided a method for manufacturing a heating element, comprising the steps of:
providing a laminate manufactured by the above method,
processing the copper foil of the laminate to form a heating wire having a predetermined pattern, and
attaching or forming an additional polyvinyl acetal resin film on the laminate in which the heating wire is formed, so as to sandwich the heating wire, to form a heating element.

According to another aspect of the present invention, there is provided a defroster comprising a heating element manufactured by the above method.

### DESCRIPTION OF EMBODIMENTS

### Definitions

The definitions of the parameters used for specifying the present invention are shown below.

The "developed interfacial area ratio Sdr" or "Sdr" herein is a parameter representing how much the developed area (surface area) of a definition area increases with respect to the area of the definition area, measured in accordance with ISO 25178. The developed interfacial area ratio Sdr is herein represented as an increase (%) in surface area. As this value becomes smaller, it is indicated that the surface shape is closer to flatness. The Sdr of a completely flat surface is 0%. On the other hand, as this value becomes larger, it is indicated that the surface shape is more uneven. For example, when the Sdr of a surface is 4.00%, it is indicated that the surface area of this surface increases from that of a completely flat surface by 4.00%.

The "root mean square height Sq" or "Sq" herein is a parameter corresponding to the standard deviation of distances from an average surface, measured in accordance with ISO 25178. The concept of the root mean square height Sq is close to that of average roughness, but the root mean square height Sq is easy to statistically handle and less likely to be influenced by dust and flaws present on a measurement surface, and disturbances such as noise, and therefore a stable result can be obtained.

The "density of peaks Spd" or "Spd" herein is a parameter representing the number of peaks per unit area, measured in accordance with ISO 25178. The density of peaks Spd can be obtained by counting only peaks larger than 5% of the maximum amplitude of a contour curved surface and dividing the number of peaks included in the contour curved surface by the projected area of the contour curved surface. When this value is large, it is suggested that the number of contact points with another object is large.

The developed interfacial area ratio Sdr, the root mean square height Sq, and the density of peaks Spd can each be calculated by measuring the surface profile of a predetermined measurement area (for example, a two-dimensional region of 16384 µm²) on a treated surface by a commercially available laser microscope. The numerical values of the developed interfacial area ratio Sdr and the root mean square height Sq herein are values measured under conditions in which the cutoff wavelength of an S-filter is 0.55 µm, and the cutoff wavelength of an L-filter is 10 µm. The numerical value of the density of peaks Spd herein is a value measured under conditions in which the cutoff wavelength of an S-filter is 2 µm, and the cutoff of an L-filter is not performed.

### Method for Manufacturing Laminate

The present invention relates to a method for manufacturing a laminate. The method of the present invention comprises the steps of (1) providing a copper foil having a predetermined treated surface on at least one side, and (2) attaching or forming a polyvinyl acetal resin film (hereinafter sometimes simply referred to as a "resin film") on the treated surface of the copper foil. The treated surface of the copper foil has a developed interfacial area ratio Sdr of 0.50% or more and 9.00% or less and a root mean square height Sq of 0.010 µm or more and 0.200 µm or less. By attaching or forming a polyvinyl acetal resin film on a copper foil having a treated surface on which the Sdr and Sq are controlled in the predetermined ranges respectively as such, a laminate excellent in adhesion between the copper foil and the resin film can be manufactured.

Generally, in the fabrication of a copper-clad laminate used for the manufacture of a printed wiring board, and the like, by pressing a copper foil and a prepreg (a composite material in which a substrate is impregnated with a thermosetting resin) under the conditions of high temperature and high pressure (for example, 220°C and 4 MPa) for a long time (for example, 90 minutes), the resin can be allowed to sufficiently bite into the copper foil. Therefore, from the viewpoint of the adhesion to the resin, usually, it can be said that a rougher uneven shape of the copper foil surface (larger nodules) is better.

In contrast to this, in the method of the present invention, by using a copper foil having a treated surface controlled in a fine uneven shape, the adhesion between the copper foil and the resin film can be improved. Specifically, as described above, a polyvinyl acetal resin is a thermoplastic resin having high light transmission properties used as a glass intermediate film, and the lamination with a copper foil needs to be performed under the conditions of low temperature and low pressure (for example, 180°C or less and 0.6 MPa or less) for a short time (for example, several tens of seconds or less). Therefore, a polyvinyl acetal resin has low reactivity with a copper foil, and it has been difficult to ensure adhesion between the copper foil and the polyvinyl acetal resin film. The present inventors have studied this problem and, as a result, found that when a copper foil surface has a fine uneven shape, the infiltration properties (wetting and spreading) of a polyvinyl acetal resin into the copper foil improve, and a polyvinyl acetal resin film can be allowed to effectively bite into the copper foil. In addition, the present inventors have found that in order to control a copper foil surface in a fine uneven shape, it is effective to evaluate Sdr and Sq in combination. Then, the present inventors have obtained a breakthrough indication that by controlling the Sdr and Sq of the treated surface of a copper foil within the predetermined ranges, a laminate excellent in adhesion between the copper foil and the resin film can be manufactured.

### (1) Provision of Copper Foil

The copper foil used in the method of the present invention has a treated surface on at least one side. This treated surface has a developed interfacial area ratio Sdr of 0.50% or more and 9.00% or less, preferably 2.50% or more and 9.00% or less, and more preferably 5.00% or more and 9.00% or less. When the developed interfacial area ratio Sdr is within such a range, the surface area of the treated surface contributing to adhesion to a resin film can also be increased while the treated surface has small nodules suitable for the infiltration of a polyvinyl acetal resin, and therefore the adhesion between the copper foil and the resin film can be improved.

The treated surface of the copper foil has a root mean square height Sq of 0.010 µm or more and 0.200 µm or less, preferably 0.050 µm or more and 0.180 µm or less, and more preferably 0.100 µm or more and 0.140 µm or less. When the root mean square height Sq is within such a range, the treated surface of the copper foil has small nodules suitable for the infiltration of a polyvinyl acetal resin, and the adhesion between the copper foil and the resin film can be improved.

The treated surface of the copper foil preferably has a density of peaks Spd of 100 mm⁻² or more and 26000 mm⁻² or less, more preferably 10000 mm⁻² or more and 20000 mm⁻² or less, and further preferably 10000 mm⁻² or more and 15000 mm⁻² or less. When the density of peaks Spd is within such a range, a polyvinyl acetal resin even more easily infiltrates the copper foil surface, and the contact points between the copper foil and a resin film can also be increased, and therefore the adhesion between the copper foil and the resin film can be even more improved.

The treated surface having the surface parameters can be formed by subjecting a copper foil surface to surface treatment under known or desired conditions. A commercially available copper foil having a treated surface satisfying the various conditions may be selectively obtained.

The surface treatment can be various types of surface treatments performed in order to improve or provide some kind of properties (for example, rust proofing properties, moisture resistance, chemical resistance, acid resistance, heat resistance, and adhesion to a resin film) on the surface of a copper foil. Examples of the surface treatment performed on a copper foil include rust proofing treatment, silane treatment, and roughening treatment, and the like.

The treated surface of the copper foil preferably comprises a plurality of roughening particles. In other words, the surface treatment preferably comprises roughening treatment. The surface treatment (for example, roughening treatment) may be performed on at least one surface of a copper foil or both surfaces of a copper foil. Anyway, the copper foil may have treated surfaces (for example, roughening-treated surfaces) on both sides or may have a treated surface only on one side.

The thickness of the copper foil is not particularly limited but is preferably 0.1 µm or more and 35 µm or less, more preferably 0.3 µm or more and 18 µm or less, and further preferably 1.0 µm or more and 12 µm or less. The copper foil may be provided in the form of a carrier-attached copper foil in order to improve the handleability. The carrier-attached copper foil typically comprises a carrier, a release layer provided on this carrier, and a copper foil provided on this release layer with the treated surface on the outside. However, in the carrier-attached copper foil, a known layer configuration can be adopted as long as the outside surface of the copper foil has the surface parameters.

### (2) Attachment or Formation of Resin Film on Copper Foil

A polyvinyl acetal resin film is attached to or formed on the treated surface of the copper foil provided in the (1) to form a laminate. The attachment of the resin film to the copper foil is preferably performed by thermocompression-bonding or adhering a previously provided resin film to the copper foil. Preferably, the attachment of the resin film to the copper foil is performed by thermocompression-bonding the resin film and the copper foil at a temperature of 180°C or less and a pressure of 0.6 MPa or less, more preferably at a temperature of 100°C or more and 150°C or less and a pressure of 0.2 MPa or more and 0.6 MPa or less. This thermocompression bonding is preferably performed in 60 seconds or less, more preferably 10 seconds or more and 30 seconds or less. As described above, according to the method of the present invention, a laminate excellent in adhesion between the copper foil and the resin film can be manufactured even under the lamination conditions of such low temperature and low pressure.

On the other hand, the formation of the resin film on the copper foil is preferably performed by covering or coating the copper foil with the resin composition constituting the resin film, using a known method such as a melt extrusion process, a casting process, or a coating process. Thus, the resin film can be directly formed (formed in situ) on the copper foil. For example, when the resin film is directly formed on the copper foil by a melt extrusion process, the resin temperature during extrusion is preferably 250°C or less, more preferably 150°C or more and 230°C or less, from the viewpoint of efficiently removing the volatile substance in the resin film.

The thickness of the resin film is not particularly limited but is preferably 1 µm or more and 1000 µm or less, more preferably 10 µm or more and 900 µm or less, and further preferably 80 µm or more and 900 µm or less. When the thickness of the resin film is within such a range, both good light transmission properties and conveyability (that is, the property of supporting a circuit (heating wire) obtained by processing the copper layer) can be achieved.

The resin film should comprise a polyvinyl acetal resin and may further comprise a known additive. Preferred examples of the polyvinyl acetal resin included in the resin film include polyvinyl butyral resins from the viewpoint of penetration impact resistance, transparency, and the like as a glass intermediate film. Examples of the additive that can be included in the resin film include a plasticizer, an antioxidant, an ultraviolet absorbing agent, and an adhesion modifier, and the like. Anyway, for the resin film, a commercially available polyvinyl acetal resin film may be used as it is, or the resin film may be fabricated by adopting an already known method for manufacturing a polyvinyl acetal resin film (for example, see Patent Literatures 2 and 3) as it is, or appropriately changing the method.

The peel strength between the copper foil and the resin film in the laminate is preferably 0.60 kgf/cm or more, more preferably 1.00 kgf/cm or more, and further preferably 1.20 kgf/cm or more when the circuit height is 12 µm and the circuit width is 3 mm. It is better that the peel strength is high. Its upper limit value is not particularly limited but is typically 3.0 kgf/cm or less. The measurement of the peel strength can be preferably performed in accordance with the A method (90° peel) of JIS C 5016-1994 according to the procedure shown in Examples described later. When the thickness of the copper foil is less than 12 µm, the peel strength should be measured after metal plating (for example, copper plating) is performed until the copper foil reaches a thickness of 12 µm. On the other hand, when the thickness of the copper foil exceeds 12 µm, the measurement of the peel strength should be performed after etching is performed until the copper foil reaches a thickness of 12 µm.

### Method for Manufacturing Heating Element

The laminate manufactured by the method of the present invention is preferably used for the formation of a heating element. That is, according to a preferred aspect of the present invention, a method for manufacturing a heating element is provided. This method comprises the steps of providing a laminate manufactured by the above method, processing the copper foil of the laminate to form a heating wire having a predetermined pattern, and attaching or forming an additional polyvinyl acetal resin film on the laminate in which the heating wire is formed, so as to sandwich the heating wire, to form a heating element.

The processing of the copper foil should be performed based on a known method and is not particularly limited. For example, a method such as a subtractive process, a semi-additive process, and a modified semi-additive process, as disclosed in Patent Literature 4, can be used to form a heating wire having a predetermined pattern. The pattern of the heating wire preferably comprises at least one pattern selected from the group consisting of a linear shape, a wavy line shape, a lattice shape, and a net shape. From the viewpoint of the ensuring of a sufficient amount of heat generated and good visibility in the heating element, the ease of processing the copper foil, and the like, the wire width of the heating wire (wiring) is preferably 1 µm or more and 25 µm or less, more preferably 1 µm or more and 15 µm or less, and further preferably 1 µm or more and 5 µm or less. From the same viewpoint, the height (thickness) of the heating wire is preferably 1 µm or more and 25 µm or less, more preferably 1 µm or more and 15 µm or less, and further preferably 1 µm or more and 5 µm or less. Further, the proportion of the region in which the polyvinyl acetal resin film is not in contact with the heating wire (that is, the opening ratio), on the surface of the polyvinyl acetal resin film on the heating wire side is preferably 70% or more and 98% or less. Thus, even better visibility can be ensured in the heating element.

The attachment or formation of the additional polyvinyl acetal resin film on the laminate in which the heating wire is formed should follow the attachment or formation of the resin film on the copper foil described above. That is, the preferred aspects described above regarding the attachment or formation of the resin film on the copper foil also apply to the attachment or formation of the additional polyvinyl acetal resin film as they are.

### Defroster

The laminate or the heating element manufactured by the method of the present invention is preferably used for the manufacture of a defroster. That is, according to a preferred aspect of the present invention, a defroster comprising a heating element manufactured by the above method is provided. The configuration of the defroster is not particularly limited, and a known configuration can be adopted except that the defroster comprises the above-described heating element. For example, the defroster of the present invention can be used in the form of laminated glass in which the heating element described above is attached to the surface or inside of window glass in a vehicle such as an automobile. In this case, the heating wire constituting the heating element may be placed over the entire surface of the window glass or may be provided only in a particular region of the window glass. Anyway, according to the defroster of the present invention, the heating element can efficiently warm window glass and can prevent or remove frosting, icing, clouding, and the like.

### EXAMPLES

The present invention will be more specifically described by the following examples.

### Examples 1 to 7

Seven types of copper foils were provided, and resin films were attached to these copper foils to obtain laminates. The measurement of peel strength was performed using the obtained laminates. These are specifically as follows.

### (1) Provision of Copper Foils

Seven types of copper foils (roughening-treated copper foils) were provided which comprised treated surfaces (roughening-treated surfaces) having the parameters shown in Table 1 on at least one side. These copper foils were commercially available products or manufactured by a known manufacturing method as disclosed in Patent Literature 5 or the like. The thicknesses of the provided copper foils were 12 µm for Examples 1 to 3 and 5 to 7 and 18 µm for Example 4.

The parameters of the treated surfaces (roughening-treated surfaces) of the provided copper foils were measured in accordance with ISO 25178 using a laser microscope (manufactured by Olympus Corporation, OLS5000). Specifically, the surface profile of a region having an area of 16384 µm² on the treated surface of the copper foil was measured by the laser microscope by a 100x lens having a numerical aperture (N.A.) of 0.95. Noise removal and primary linear surface inclination correction were performed on the surface profile of the treated surface obtained, and then the measurement of the developed interfacial area ratio Sdr, the root mean square height Sq, and the density of peaks Spd was carried out by surface property analysis. At this time, the measurement of Sdr and Sq was carried out with the cutoff wavelength of an S-filter being 0.55 µm and the cutoff wavelength of an L-filter being 10 µm. On the other hand, the measurement of Spd was carried out with the cutoff wavelength of the S-filter being 2 µm and the cutoff of the L-filter not performed.

### (2) Attachment of Resin Film to Copper Foil

A commercially available polyvinyl butyral resin film (thickness: 760 µm) in which dihexyladipic acid was blended as a plasticizer was provided. The polyvinyl butyral resin film and the copper foil provided in the (1) were laminated on a copper-clad laminate having a thickness of 0.2 mm as a base at the time of peel measurement described later, so that the treated surface of the copper foil abutted the resin film. At this time, the copper foil and the resin film were thermocompression-bonded under the conditions of a temperature of 110°C, a pressure of 0.4 MPa, and a time of 20 seconds or less to obtain a laminate in which the copper foil and the resin film were attached.

### (3) Evaluation of Laminate

For the laminate obtained above, the measurement of peel strength was performed as follows. First, a dry film was attached to the surface of the laminate on the copper foil side to form an etching resist layer. Then, exposure and development were performed on this etching resist layer to form a predetermined etching pattern. Subsequently, circuit etching was performed with a copper etchant, and the etching resist was stripped to obtain a circuit having a height of 12 µm and a width of 3 mm. For Example 4, before the formation of the etching resist layer, etching was performed on the copper foil side surface of the laminate until the thickness of the copper foil reached 12 µm. The circuit thus obtained was peeled off from the resin film in accordance with the A method (90° peel) of JIS C 5016-1994, and the peel strength (kgf/cm) was measured. The results were as shown in Table 1.

### [Table 1]

**Table 1**

| | Surface parameters of copper foil | | | Evaluation of laminate |
|---|---|---|---|---|
| | Sdr (%) | Sq (µm) | Spd (mm⁻²) | Peel strength (kgf/cm) |
| Ex. 1 | 7.21 | 0.136 | 13000 | 1.27 |
| Ex. 2 | 0.77 | 0.022 | 407 | 0.66 |
| Ex. 3 | 2.68 | 0.045 | 1617 | 0.62 |
| Ex. 4 | 2.69 | 0.071 | 19694 | 1.12 |
| Ex. 5* | 9.51 | 0.140 | 27161 | 0.37 |
| Ex. 6* | 28.03 | 0.287 | 38635 | 0.16 |
| Ex. 7* | 67.10 | 0.591 | 31026 | 0.00 |

| | | | | |
|---|---|---|---|---|
| * indicates a comparative example. | | | | |

## Claims

1. A method for manufacturing a laminate, comprising the steps of:
providing a copper foil having a treated surface having a developed interfacial area ratio Sdr (as defined in the description) of 0.50% or more and 9.00% or less and a root mean square height Sq (as defined in the description) of 0.010 µm or more and 0.200 µm or less on at least one side, and
attaching or forming a polyvinyl acetal resin film on the treated surface of the copper foil to form a laminate,
wherein the Sdr and Sq are values measured in accordance with ISO 25178 under conditions in which a cutoff wavelength of an S-filter is 0.55 µm, and a cutoff wavelength of an L-filter is 10 µm.

2. The method according to claim 1, wherein the Sdr is 2.50% or more and 9.00% or less, and the Sq is 0.050 µm or more and 0.180 µm or less.

3. The method according to claim 1, wherein the Sdr is 5.00% or more and 9.00% or less, and the Sq is 0.100 µm or more and 0.140 µm or less.

4. The method according to any one of claims 1 to 3, wherein the treated surface has a density of peaks Spd (as defined in the description) of 100 mm⁻² or more and 26000 mm⁻² or less, and wherein the Spd is a value measured in accordance with ISO 25178 under conditions in which a cutoff wavelength of an S-filter is 2 µm, and cutoff of an L-filter is not performed.

5. The method according to claim 4, wherein the Spd is 10000 mm⁻² or more and 20000 mm⁻² or less.

6. The method according to claim 4, wherein the Spd is 10000 mm⁻² or more and 15000 mm⁻² or less.

7. The method according to any one of claims 1 to 6, wherein the treated surface comprises a plurality of roughening particles.

8. The method according to any one of claims 1 to 7, wherein attachment of the resin film to the copper foil is performed by thermocompression-bonding the resin film and the copper foil at a temperature of 180°C or less and a pressure of 0.6 MPa or less.

9. The method according to any one of claims 1 to 8, wherein the resin film has a thickness of 1 µm or more and 1000 µm or less.

10. The method according to any one of claims 1 to 9, wherein the polyvinyl acetal resin is a polyvinyl butyral resin.

11. A method for manufacturing a heating element, comprising the steps of:
providing a laminate manufactured by the method according to any one of claims 1 to 10,
processing the copper foil of the laminate to form a heating wire having a predetermined pattern, and
attaching or forming an additional polyvinyl acetal resin film on the laminate in which the heating wire is formed, so as to sandwich the heating wire, to form a heating element.

12. The method according to claim 11, wherein the predetermined pattern comprises at least one pattern selected from the group consisting of a linear shape, a wavy line shape, a lattice shape, and a net shape.

13. A defroster comprising a heating element manufactured by the method according to claim 11 or 12.

## Patentansprüche

1. Verfahren zur Herstellung eines Laminats, umfassend die folgenden Schritte:
Bereitstellen einer Kupferfolie mit einer behandelten Oberfläche mit einem entwickelten Grenzflächenverhältnis Sdr (wie in der Beschreibung definiert) von 0,50 % oder mehr und 9,00 % oder weniger und einer mittleren quadratischen Höhe Sq (wie in der Beschreibung definiert) von 0,010 µm oder mehr und 0,200 µm oder weniger auf mindestens einer Seite, und
Anbringen oder Bilden eines Polyvinylacetalharzfilms auf der behandelten Oberfläche der Kupferfolie, um ein Laminat zu bilden,
wobei Sdr und Sq Werte sind, die nach ISO 25178 unter Bedingungen gemessen wurden, bei denen eine Grenzwellenlänge eines S-Filters 0,55 µm und eine Grenzwellenlänge eines L-Filters 10 µm beträgt.

2. Verfahren nach Anspruch 1, wobei der Sdr-Wert 2,50 % oder mehr und 9,00 % oder weniger und der Sq-Wert 0,050 µm oder mehr und 0,180 µm oder weniger beträgt.

3. Verfahren nach Anspruch 1, wobei der Sdr-Wert 5,00 % oder mehr und 9,00 % oder weniger und der Sq-Wert 0,100 µm oder mehr und 0,140 µm oder weniger beträgt.

4. Verfahren nach einem der Ansprüche 1 bis 3, wobei die behandelte Oberfläche eine Dichte von Spitzen Spd (wie in der Beschreibung definiert) von 100 mm⁻² oder mehr und 26000 mm⁻² oder weniger aufweist, und wobei der Spd ein Wert ist, der nach ISO 25178 unter Bedingungen gemessen wurde, bei denen eine Grenzwellenlänge eines S-Filters 2 µm beträgt und die Abtrennung eines L-Filters nicht durchgeführt wird.

5. Verfahren nach Anspruch 4, wobei die Spd 10000 mm⁻² oder mehr und 20000 mm⁻² oder weniger beträgt.

6. Verfahren nach Anspruch 4, wobei die Spd 10000 mm⁻² oder mehr und 15000 mm⁻² oder weniger beträgt.

7. Verfahren nach einem der Ansprüche 1 bis 6, wobei die behandelte Oberfläche eine Vielzahl von Aufrauhungspartikeln umfasst.

8. Verfahren nach einem der Ansprüche 1 bis 7, wobei die Befestigung des Harzfilms an der Kupferfolie durch Thermokompressionsbinden des Harzfilms und der Kupferfolie bei einer Temperatur von 180 °C oder weniger und einem Druck von 0,6 MPa oder weniger erfolgt.

9. Verfahren nach einem der Ansprüche 1 bis 8, wobei der Harzfilm eine Dicke von 1 µm oder mehr und 1000 µm oder weniger aufweist.

10. Verfahren nach einem der Ansprüche 1 bis 9, wobei das Polyvinylacetalharz ein Polyvinylbutyralharz ist.

11. Verfahren zur Herstellung eines Heizelements, umfassend die folgenden Schritte:
Bereitstellen eines Laminats, das nach dem Verfahren nach einem der Ansprüche 1 bis 10 hergestellt wurde,
Verarbeiten der Kupferfolie des Laminats zu einem Heizdraht, der ein vorbestimmtes Muster aufweist, und
Anbringen oder Bilden eines zusätzlichen Polyvinylacetalharzfilms auf dem Laminat, in dem der Heizdraht ausgebildet ist, sodass er den Heizdraht einschließt, um ein Heizelement zu bilden.

12. Verfahren nach Anspruch 11, wobei das vorbestimmte Muster mindestens ein Muster umfasst, das aus der Gruppe ausgewählt ist, die aus einer linearen Form, einer wellenförmigen Linienform, einer Gitterform und einer Netzform besteht.

13. Entfroster, umfassend ein Heizelement, das nach dem Verfahren nach Anspruch 11 oder 12 hergestellt wurde.

## Revendications

1. Procédé de fabrication d'un stratifié, comprenant les étapes suivantes :
la fourniture d'une feuille de cuivre présentant une surface traitée présentant un rapport de surface interfaciale développée Sdr (tel que défini dans la description) supérieure ou égale à 0,50 % et inférieure ou égale à 9,00 % et une hauteur quadratique moyenne Sq (telle que définie dans la description) supérieure ou égale à 0,010 µm et inférieure ou égale à 0,200 µm sur au moins un côté, et
la fixation ou la formation d'un film de résine d'acétal polyvinylique sur la surface traitée de la feuille de cuivre pour former un stratifié,
dans lequel les valeurs Sdr et Sq sont des valeurs mesurées conformément à la norme ISO 25178 dans des conditions dans lesquelles une longueur d'onde de coupure d'un filtre S est de 0,55 µm et une longueur d'onde de coupure d'un filtre L est de 10 µm.

2. Procédé selon la revendication 1, dans lequel la valeur Sdr est supérieure ou égale à 2,50 % et inférieure ou égale à 9,00 %, et la valeur Sq est supérieure ou égale à 0,050 µm et inférieure ou égale à 0,180 µm.

3. Procédé selon la revendication 1, dans lequel la valeur Sdr est supérieure ou égale à 5,00 % et inférieure ou égale à 9,00 %, et la valeur Sq est supérieure ou égale à 0,100 µm et inférieure ou égale à 0,140 µm.

4. Procédé selon l'une quelconque des revendications 1 à 3, dans lequel la surface traitée présente une densité de pics Spd (telle que définie dans la description) supérieure ou égale à 100 mm⁻² et inférieure ou égale à 26 000 mm⁻², et dans lequel la valeur Spd est une valeur mesurée conformément à la norme ISO 25178 dans des conditions dans lesquelles une longueur d'onde de coupure d'un filtre S est de 2 µm, et une coupure d'un filtre L n'est pas réalisée.

5. Procédé selon la revendication 4, dans lequel la valeur Spd est supérieure ou égale à 10 000 mm⁻² et inférieure ou égale à 20 000 mm⁻².

6. Procédé selon la revendication 4, dans lequel la valeur Spd est supérieure ou égale à 10 000 mm⁻² et inférieure ou égale à 15 000 mm⁻².

7. Procédé selon l'une quelconque des revendications 1 à 6, dans lequel la surface traitée comprend une pluralité de particules rugueuses.

8. Procédé selon l'une quelconque des revendications 1 à 7, dans lequel la fixation du film de résine à la feuille de cuivre est réalisée par liaison par thermocompression du film de résine et de la feuille de cuivre à une température inférieure ou égale à 180 °C et une pression inférieure ou égale à 0,6 MPa.

9. Procédé selon l'une quelconque des revendications 1 à 8, dans lequel le film de résine présente une épaisseur supérieure ou égale à 1 µm et inférieure ou égale à 1 000 µm.

10. Procédé selon l'une quelconque des revendications 1 à 9, dans lequel la résine d'acétal polyvinylique est une résine de butyral polyvinylique.

11. Procédé de fabrication d'un élément chauffant, comprenant les étapes suivantes :
la fourniture d'un stratifié fabriqué par le procédé selon l'une quelconque des revendications 1 à 10,
le traitement de la feuille de cuivre du stratifié pour former un fil chauffant présentant un motif prédéterminé, et
la fixation ou la formation d'un film de résine d'acétal polyvinylique supplémentaire sur le stratifié dans lequel le fil chauffant est formé, de sorte à prendre en sandwich le fil chauffant, pour former un élément chauffant.

12. Procédé selon la revendication 11, dans lequel le motif prédéterminé comprend au moins un motif sélectionné dans le groupe constitué d'une forme linéaire, d'une forme de ligne ondulée, d'une forme de treillis, et d'une forme de filet.

13. Dégivreur comprenant un élément chauffant fabriqué par le procédé selon la revendication 11 ou 12.
